# EUROPÄISCHE PATENTSCHRIFT

(11) **EP 0 761 385 B1**
(45) Veröffentlichungstag und Bekanntmachung des Hinweises auf die Patenterteilung: **03.03.1999**
(21) Anmeldenummer: 96110451.0
(22) Anmeldetag: 28.06.1996
(51) Int. Cl.: B23Q 11/08

(54) **Positioniereinrichtung mit Abdeckung**
Positioning device with sealing means
Dispositif de positionnement avec recouvrement

(30) Priorität: 23.08.1995 DE 29513520 U
(43) Veröffentlichungstag der Anmeldung: 12.03.1997
(73) Patentinhaber: RK Rose + Krieger GmbH & Co. KG Verbindungs- und Positioniersysteme, D-32423 Minden (DE)
(72) Erfinder: Meyer, Ralf-Hermann, 31592 Stolzenau (DE); Heinzel, Bernd, 32457 Porta Westfalica (DE)
(74) Vertreter: Stracke, Alexander, Dipl.-Ing.

(56) Entgegenhaltungen:
- US-A- 4 389 006
- US-A- 4 512 208
- US-A- 5 074 160
- US-A- 5 106 205

## Beschreibung

Die vorliegende Erfindung betrifft eine einen Aufnahmeschlitten aufweisende Positioniereinrichtung gemäß dem Oberbegriff des Anspruches 1.

Solche Positioniereinrichtungen wie sie z.B. der US-A-4512208, der US-A-5074160, oder der US-A-5106205 zu entnehmen sind, finden in vielen Bereichen Verwendung. Dabei dienen die Aufnahmeschlitten als Träger für Bearbeitungswerkzeuge oder ähnliche, in jeweils unterschiedliche Arbeitsstellungen bringbare Gerätschaften.

Der Antrieb erfolgt vor allem durch eine im Profilrohr liegende Spindel, die beispielsweise durch einen Motor oder eine Handkurbel drehbar ist, während ein die Spindel übergreifendes Mutterteil fest mit dem Aufnahmeschlitten verbunden ist.

Einerseits aus Fertigungsgründen, andererseits aber auch um einen weitestmöglichen Verschiebeweg des Aufnahmeschlittens zu ermöglichen, ist das Profilrohr in seiner gesamten Länge geschlitzt. Das Mutterteil bzw. ein damit verbundenes, an den Aufnahmeschlitten angeschlossenes Befestigungsteil durchtritt diesen Längsschlitz vollständig.

Zum Schutz des Innenraumes des Profilrohres vor Verschmutzungen, die eine Beeinträchtigung der Funktionsfähigkeit des Antriebs zur Folge haben könnte sowie zum Schutz vor Beschädigungen des Antriebs ist der Längsschlitz mit einem Abdeckband abgedeckt, das beidseits des Aufnahmeschlittens, den Längsschlitz vollständig abdeckend, auf dem Profilrohr bzw. auf entsprechenden Auflagekanten des Längsschlitzes aufliegt.

Die Enden des Abdeckbandes, das so durch den Aufnahmeschlitten geführt ist, daß während dessen Verschiebens der Längsschlitz freiliegt, während der Aufnahmeschlitten über das Abdeckband hinweggleitet, ist mit beiden Enden in den Lagerböcken befestigt.

Bislang wird das Abdeckband in den Lagerböcken in der Form befestigt, daß in diese eingeführte Stifte oder Schrauben in ein am jeweiligen Ende des Abdeckbandes vorgesehenes Loch eingreifen.

Diese formschlüssige Art der Festlegung erfordert jedoch eine sehr genaue Fertigung, da ja - wie erwähnt - das Abdeckband vollflächig auf dem Längsschlitz aufliegen soll.

Durch die unveränderbare endseitige Fixierung können sich überdies insofern Probleme ergeben, als das Abdeckband mit zunehmender Betriebsdauer eine Reckung erfährt, die dazu führt, daß der Längsschlitz nicht mehr exakt abgedeckt wird.

Der vorliegenden Erfindung liegt daher die Aufgabe zugrunde, eine Positionierenrichtung der gattungsgemäßen Art so zu gestalten, daß die Montage und Befestigung des Abdeckbandes einfacher und dauerhafter funktionssicher wird.

Diese Aufgabe wird durch eine Positioniereinrichtung gelöst, die die Merkmale des Anspruches 1 aufweist.

Das Abdeckband wird nunmehr durch Reibschluß gehalten, wobei ein Fixierbereich im Abdeckband nicht mehr erforderlich ist und somit dessen maßgenaues Einbringen entfällt.

Dies hat zur Folge, daß nicht nur die Herstellung einfacher, schneller und somit kostengünstiger wird, sondern auch die Montage des Abdeckbandes bzw. der gesamten Positioniereinrichtung. Naturgemäß ist dies mit einer erheblichen Kosteneinsparung verbunden.

Ein weiterer Vorteil der Erfindung besteht darin, daß eine Längenänderung durch Reckung des Abdeckbandes durch einfaches Neufixieren ausgeglichen werden kann. Hierdurch ist gewährleistet, daß das Abdeckband problemlos bei Bedarf so eingesstellt werden kann, daß es immer den Längsschlitz abdichtend auf dem Profilrohr aufliegt.

Vorteilhafte Weiterbildungen der Erfindung sind in den Unteransprüchen gekennzeichnet.

Ein Ausführungsbeispiel wird nachfolgend anhand der beigefügten Zeichnung beschrieben.

Es zeigen:
- Fig. 1: eine Erfindungsgemäß Positioniereinrichtung in einer Seitenansicht,
- Fig. 2: einen Längsschnitt durch einen Lagerbock der Positioniereinrichtung,
- Fig. 3: eine teilweise geschnittene Vorderansicht der Lagerbockes.

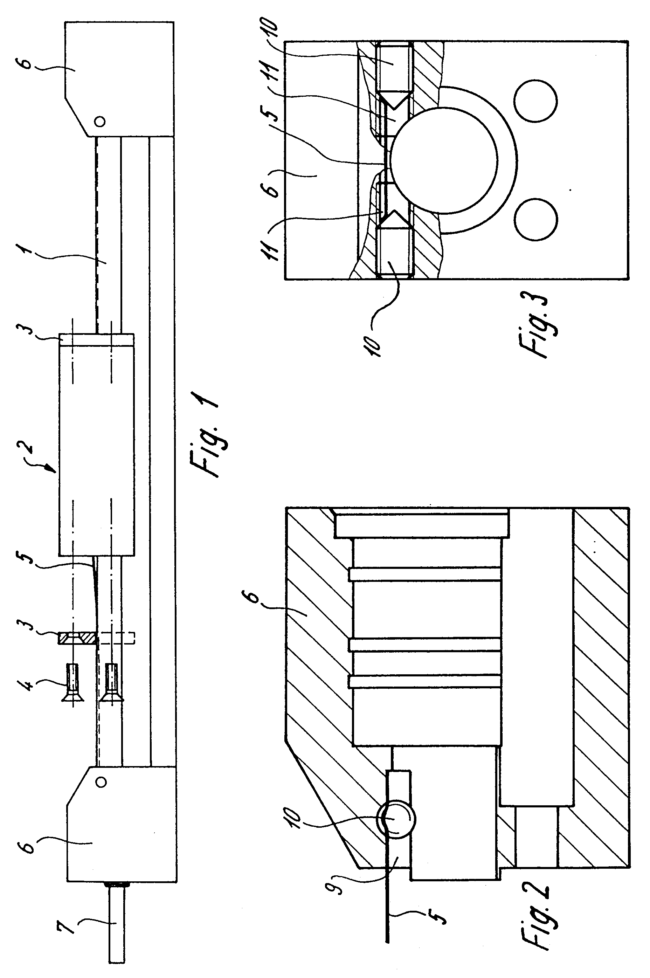

In der Fig. 1 ist eine Positioniereinrichtung dargestellt, die ein Profilrohr 1 und einen Aufnahmeschlitten 2 aufweist, der auf dem Profilrohr 1 hin und her verfahrbar ist.

Endseitig ist das Profilrohr 1 in Lagerböcken 6 festgelegt, in denen gleichfalls eine Spindel 7 gelagert ist, über die der Aufnahmeschlitten 2 bewegbar ist.

Dabei weist der Aufnahmeschlitten 2 ein nicht dargestelltes Mutterteil auf, das mit der Spindel 7 in Wirkverbindung steht.

Auf seiner Oberseite ist das Profilrohr 1 in seiner gesamten Länge mit einem Längsschlitz versehen, den das Mutterteil durchtritt und der beidseitig des Aufnahmeschlittens 2 durch ein Abdeckband 5 abgedeckt ist.

Das Abdeckband 5 wird oberhalb der Oberseite des Profilrohres 1 durch den Aufnahmeschlitten 2 geführt, wobei dort endseitig zwei Kappen 3 mittels Schrauben 4 so befestigt sind, das diese das Abdeckband unmittelbar an das Profilrohr 1 andrücken.

Die beiden Enden des Abdeckbandes 5 sind in taschenförmigen Ausnehmungen 9 der Lagerböcke 6 angeordnet, in die seitlich, sich gegenüberliegend, zwei Gewindebohrungen 11 münden, in die Kegelschrauben 10 so eingedreht sind, daß ihre Kegelflächen zueinander weisen.

Das Abdeckband 5, das sich an der Oberseite der Ausnehmung 9 abstützt, wird durch die Kegelflächen der Kegelschrauben 10, die an der Unterseite des Abdeckbandes 5 anliegen, an diese Oberseite der Ausnehmung 9 gepreßt.

Da dabei das Abdeckband insofern verformt wird, als der Berührungsbereich mit der jeweiligen Kegelschraube 10 in die Rundung der Gewindebohrung 11 gepreßt wird, wird neben dem Reibschluß auch ein Formschluß erreicht, der eine besonders sichere Fixierung des Abdeckbandes 5 garantiert.

Wesentlich dabei ist, daß ein Teil der Gewindebohrung 11 in die Aufnahme 9 hineinragt.

## Patentansprüche

1. Einen Aufnahmeschlitten (2) aufweisende Positioniereinrichtung mit einem an beiden Enden in Lagerböcken (6) gelagerten Profilrohr (1), auf dem der Aufnahmeschlitten (2) festgelegt und in Längsachsrichtung mittels eines Antriebs hin und her bewegbar ist, und einem in den Profilrohr (1) geführten Antriebsmittel, das über ein an dem Aufnahmeschlitten (2) befestigten Verbindungsteil an dem Aufnahmeschlitten (2) angeschlossen ist, wobei das Verbindungsteil einen Längsschlitz des Profilrohres (1) durchtritt, der mittels eines in den Lagerböcken (6) endseitig gehaltenen Abdeckbandes (5), das durch den Aufnahmeschlitten (2) geführt ist, außerhalb dessen verschlossen ist, **dadurch gekennzeichnet, daß** die Enden des Abdeckbandes (5) durch mindestens eine, in den zugeordneten Lagerbock (6) eingedrehte Kegelschraube (10) an eine Begrenzungswand einer Ausnehmung (9) des Lagerbocks gepreßt sind, wobei die Kegelfläche der Kegelschraube (10) an einer Breitseite des Abdeckbandes (5) anliegt.

2. Positioniereinrichtung nach Anspruch 1, dadurch gekennzeichnet, daß zwei Kegelschrauben (10) in jedem Lagerbock (6) vorgesehen sind, die in darin angeordnete, sich direkt gegenüberliegende Gewindebohrungen (11) eingedreht sind.

3. Positioniereinrichtung nach Anspruch 2, dadurch gekennzeichnet, daß die Gewindebohrungen (11) in ihrer der Begrenzungswand der Ausnehmung (9) zugewandten Bereich teilweise in diese Begrenzungswand hineinragen.

## Claims

1. A positioning device having a mounting slide (2), with a shaped tube (1) which is supported at both ends in mounting supports (6) and on which the mounting slide (2) is fixed and is reciprocable in the direction of the longitudinal axis by means of a drive, and a drive means which is guided in the shaped tube (1) and which is connected to the mounting slide (2) by way of a connecting portion fixed to the mounting slide (2), wherein the connecting portion passes through a longitudinal slot in the shaped tube (1) which is closed outside the mounting slide by means of a cover strip (5) which is held at the ends in the mounting supports (6) and which is guided through the mounting slide (2), characterised in that the ends of the cover strip (5) are pressed against a boundary wall of an opening (9) of the mounting support by at least one tapered screw (10) which is screwed into the associated mounting support (6), wherein the taper surface of the tapered screw (10) bears against a wide side of the cover strip (5).

2. A positioning device according to claim 1 characterised in that there are provided in each mounting support (6) two tapered screws (10) which are screwed into mutually directly oppositely disposed screwthreaded bores (11) arranged in the mounting support.

3. A positioning device according to claim 2 characterised in that in their region towards the boundary wall of the opening (9) the screwthreaded bores (11) project partially into said boundary wall.

## Revendications

1. Dispositif de positionnement présentant un chariot à logement (2), comportant un tube profilé (1) monté, aux deux extrémités, dans des paliers (6), tube sur lequel le chariot à logement (2) est monté et est susceptible d'effectuer des allers et retours, dans la direction de l'axe longitudinal, grâce à un entraînement, et comportant un moyen d'entraînement, guidé dans le tube profilé (1), qui est relié au chariot à logement (2) par l'intermédiaire d'un élément de liaison fixé sur le chariot à logement (2), l'élément de liaison traversant une fente longitudinale du tube profilé (1) qui est fermée, à l'extérieur de celle-ci, par une bande de recouvrement (5) maintenue, à ses extrémités, dans les paliers (6), qui passe à travers le chariot à logement (2), caractérisé en ce que les extrémités de la bande de recouvrement (5) sont pressées, par au moins une vis à pointe conique (10), vissée dans le palier (6) correspondant, sur une paroi limitrophe d'un logement (9) du palier, la surface conique de la vis à pointe conique (10) s'appliquant sur un côté plat de la bande de recouvrement (5).

2. Dispositif de positionnement selon la revendication 1, caractérisé en ce que deux vis à pointe conique (10) sont prévues dans chaque palier (6) et sont vissées dans des taraudages (11) qui y sont ménagés, directement en regard l'un de l'autre.

3. Dispositif de positionnement selon la revendication 2, caractérisé en ce que les taraudages (11), dans Peur zone orientée en direction de la paroi délimitant le logement (9), s'enfoncent partiellement dans cette paroi périphérique.
